# EUROPEAN PATENT APPLICATION

(11) **EP 4 474 277 A1**
(43) Date of publication of application: **11.12.2024**
(21) Application number: 24180332.9
(22) Date of filing: 05.06.2024
(51) Int. Cl.: B64D 11/06, A47C 1/034, A47C 7/50, B60N 2/90, B60N 3/06

(54) **FOOTREST**

(30) Priority: 05.06.2023 GB 202308348
(71) Applicant: Acro Aircraft Seating Limited, Crick, Northamptonshire NN6 7SL (GB)
(72) Inventor: WILLIAMS, John, Crick, NN6 7SL (GB)
(74) Representative: Sweetinburgh, Mark Roger

(57) **Abstract**

Described is a footrest for a seat. The footrest comprises (i) one or more foot supports for supporting one or more feet, and (ii) one or more mounts to which the one or more foot supports are connected. The one or more foot supports are slideable and pivotable relative to the one or more mounts. Also described is a seat comprising the footrest and a row of said seats.

## Description

The present invention relates to a footrest for a seat, in particular to a footrest for a vehicle seat such as an aircraft seat.

Whilst air travel allows passengers to travel long distances in a relatively short period of time, flights can typically last for several hours. For much of the time on board an aircraft, which not only includes time in the air, but also pre- and post-flight periods of time, passengers are generally seated. This means that a passenger's legs can be stationary for several hours at a time in a restricted position. One consequence of this is an increased risk of deep vein thrombosis (DVT) whereby a blood clot develops, usually in a deep leg vein.

Deep vein thrombosis is a particular problem with air travel because a major cause of DVT is sitting too long in one position without moving. Whilst aircraft passengers are encouraged to reduce this risk by wearing compression stockings and taking regular exercise within the aircraft cabin, for example by walking up and down the aisle, this is not always possible. In particular, there can be limited opportunities to exercise within the cabin due to the limited space. It is also not always possible for a passenger to leave their seat, for example during take-off, landing and if the plane is experiencing turbulence.

It is, therefore, an object of the present invention to seek to alleviate the above identified problems.

### SUMMARY OF THE INVENTION

According to one aspect of the present invention, there is provided a footrest for a seat, wherein the footrest comprises (i) one or more foot supports for supporting one or more feet, and (ii) one or more mounts to which the one or more foot supports are connected, wherein the one or more foot supports are slideable and pivotable relative to the one or more mounts.

The present invention provides a footrest upon which a person can not only rest one or both of their feet, but with which a person can exercise one or both of their legs by sliding and pivoting the one or more foot supports relative to the one or more mounts with one or both of their feet. As will be appreciated, this movement is achieved by a person applying a force to the one or more foot supports by one or both of their feet.

According to particular embodiments of the invention, this allows a passenger to exercise their legs during a flight by rocking the one or more foot supports upwards and downwards and pushing the one or more foot supports forwards and rearwards.

Preferably, the one or more foot supports are slideable and pivotable relative to the one or more mounts by one or more feet positioned on the one or more foot supports.

Preferably, slideable and pivotable movement of the one or more foot supports is the result of a force applied thereto by one or more feet of a person positioned on the one or more foot supports.

Preferably, the one or more foot supports are slideable forwards and rearwards relative to the one or more mounts.

Preferably, the one or more foot supports are slideable forwards and rearwards between a first sliding stop position and a second sliding stop position, wherein the first sliding stop position is a rearward sliding stop position and the second sliding stop position is a forward sliding stop position.

Preferably, the one or more foot supports are slidable forwards by a person placing one or both of their feet on the one or more foot supports and pushing the one or more foot supports forward with one or both of their feet, preferably with the sole or soles of one or both of their feet, preferably with the heel or heels of one or both of their feet.

Preferably, the one or more foot supports are slidable rearwards by a person placing one or both of their feet on the one or more foot supports and pulling the one or more foot supports rearward with one or both of their feet, preferably with the sole or soles of one or both of their feet, preferably with the ball or balls of one or both of their feet.

Preferably, the one or more foot supports are slidable along a slope wherein the first sliding stop position is lower than the second sliding stop position. As such, as the one or more foot supports move from the first sliding stop position to the second sliding stop position they not only move forwards but also move upwards.

Preferably, the first sliding stop position is lower than the second stop sliding position.

Preferably, the one or more foot supports are slideable forwards and rearwards a distance of between about 2cm and about 15cm between the first and second sliding stop positions, preferably between about 2cm and about 10cm, preferably between about 2cm and about 8cm, preferably between about 2cm and about 6cm, preferably about 4cm.

Preferably, the one or more foot supports are pivotable downwards and upwards relative to the one or more mounts.

As will be appreciated, reference to "pivotable downwards" preferably means pivotable towards a horizontal position and "pivotable upwards" preferably means pivotable away from horizontal position.

Preferably, "pivotable downwards" means wherein forward edge of the one or more foot supports moves downwards. Preferably, "pivotable upwards" means wherein a forward edge of the one or more foot supports moves upwards.

Preferably, the one or more foot supports are pivotable downwards from a rest position.

Preferably, the one or more foot supports are pivotable upwards from a rest position.

Preferably, the one or more foot supports are pivotable upwards by a person placing one or both of their feet on the one or more foot supports and pivoting the one or more foot supports upwards with one or both of their feet, preferably with the sole or soles of one or both of their feet, preferably with the heel or heels of one or both of their feet.

Preferably, the one or more foot supports are pivotable downwards by a person placing one or both of their feet on the one or more foot supports and pivoting the one or more foot supports downwards with one or both of their feet, preferably with the sole or soles of one or both of their feet, preferably with the ball or balls of one or both of their feet.

Preferably, the one or more foot supports are slidable forwards by a person placing one or both of their feet on the one or more foot supports, pivoting the one or more foot supports upwards and pushing the one or more foot supports forward with one or both of their feet, preferably with the sole or soles of one or both of their feet, preferably with the heel or heels of one or both of their feet.

Preferably, the one or more foot supports are slidable rearwards by a person placing one or both of their feet on the one or more foot supports, pivoting the one or more foot supports downwards and pulling the one or more foot supports rearward with one or both of their feet, preferably with the sole or soles of one or both of their feet, preferably with the ball or balls of one or both of their feet.

Preferably, the one or more foot supports are pivotable about a lateral axis. As will be appreciated, a lateral axis is from a first side of the footrest to a second side of the footrest so that the one or more foot supports rock downwards and upwards.

Preferably, the lateral axis passes through a point which is positioned between about 40% and about 60% along each side of the foot support.

Preferably, the lateral axis passes through a point which is positioned about half way along each side of the foot support.

Preferably, the one or more foot supports are pivotable downwards and upwards between a first pivot stop position and a second pivot stop position, wherein the first pivot stop position is an upward pivot position and the second pivot stop position is a downward pivot position.

Preferably, the one or more foot supports are pivotable upwards and downwards between a first pivot stop position and a second pivot stop position by between about 5 degrees and about 20 degrees of rotation, preferably between about 5 degrees and about 15 degrees of rotation, preferably between about 6 degrees and about 10 degrees of rotation, preferably by about 8 degrees of rotation.

Preferably, pivotable movement of the one or more foot supports is biased towards a rest position.

Preferably, the force required to move the one or more foot supports away from the rest position is adjustable.

Preferably, the footrest comprises one or more biasing means for urging the one or more foot supports to the rest position.

Preferably, the one or more biasing means comprise one or more springs.

Preferably, the one or more biasing means are adjustable.

Preferably, the rest position is at or near the first pivot stop position.

Preferably, the rest position is the first pivot stop position.

Preferably, the rest position is at an angle of between about 15 degrees and about 30 degrees to a horizontal position, preferably between about 20 degrees and about 25 degrees, preferably about 23 degrees to a horizontal position.

As will be appreciated, reference to a "horizontal position" preferably corresponds to the plane of the floor of an aircraft cabin. As such, in preferred embodiments, the rest position is at an angle of between about 15 degrees and about 30 degrees to the floor of an aircraft cabin, preferably between about 20 degrees and about 25 degrees, preferably about 23 degrees to the floor of an aircraft cabin.

Preferably, the footrest comprises a single foot support for supporting a pair of feet. Alternatively, the footrest comprises a pair of foot supports each for supporting a foot.

Preferably, the one or more foot supports comprise one or more platforms for supporting one or more feet. Preferably, the one or more platforms comprise one or more plates.

Preferably, the one or more foot supports are connected to the one or more mounts by one or more connectors.

Preferably, the footrest comprises one or more connectors for connecting the one or more foot supports to the one or more mounts.

Preferably, the footrest comprises one or more connectors for each of the one or more foot supports. Preferably, the footrest comprises one or two connectors for each of the one or more foot supports.

In one example, the footrest comprises a single foot support for supporting a pair of feet, wherein the foot support is connected to a first mount by a first connector and to a second mount by a second connector.

Preferably each foot support comprises a first connector for connecting a first lateral side of the foot support to a first mount and a second connector for connecting a second lateral side of the foot support to a second mount.

Preferably, the one or more connectors are configured for pivotable engagement with one or more of said foot supports and slideable engagement with one or more of said mounts.

Preferably, the one or more connectors comprise one or more foot support mating parts and one or more mount mating parts, wherein the one or more foot support mating parts are for pivotably mounting the connector to the foot support and the one or more mount mating parts are for slideably mounting the connector to the mount.

Preferably, each of the one or more mounts comprises one or more sliding mating parts for slideable engagement with one or more of said connectors or one or more of said foot supports.

Preferably, each of the one or more foot supports comprises one or more pivot mating parts, wherein the one or more pivot mating parts are for pivotable engagement with one or more foot support mating parts of the connector or one or more sliding mating parts of the mount.

Preferably, the footrest comprises one or more foot supports, one or more mounts and one or more connectors, wherein (a) one or more pivot mating parts of the one or more foot supports are in pivotable engagement with one or more foot support mating parts of the one or more connectors, and (b) one or more sliding mating parts of the one or more mounts are in slideable engagement with one or more mount mating parts of the one or more connectors.

Preferably, the footrest comprises one or more foot supports and one or more mounts, wherein one or more pivot mating parts of the one or more foot supports are in pivotable and slideable engagement with one or more sliding mating parts of the one or more mounts.

Preferably, the one or more pivot mating parts comprise one or more protrusions, preferably one or more bars. As such, it will be appreciated that the one or more pivot mating parts can pivotably engage with a recess in one of said connectors or a channel in one of said mounts, wherein the recess in one of said connectors is a foot support mating part and the channel in one of said mounts is a sliding mating part.

Preferably, the one or more foot mating parts comprise a recess.

Preferably, the one or more sliding mating parts comprise a channel.

Alternatively, the one or more pivot mating parts comprise a recess for receiving a protrusion, preferably a bar, of the one or more connectors, wherein the protrusion of the one or more connectors is a foot support mating part.

Preferably, the one or more foot support mating parts comprise a protrusion, preferably a bar.

Preferably, the one or more sliding mating parts comprise a channel for mating with one or more pivot mating parts of the one or more foot supports or with one or more mount mating parts of the one or more connectors.

Preferably, the one or more mount mating parts of the one or more connectors comprise one or more protrusions, preferably a plurality of protrusions and/or one or more elongate protrusions, for example one or more ribs for engagement with one or more sliding mating parts of the one or more mounts, preferably wherein the one or more sliding mating parts comprise one or more channels.

Preferably, the one or more protrusions comprise one or more connector feet for engagement with one or more channels of the one or more sliding mating parts.

Alternatively, the one or more sliding mating parts comprise a protrusion, preferably a plurality of protrusions and/or one or more elongate protrusions, for example one or more ribs, for mating with one or more mount mating parts of the one or more connectors preferably wherein the one or more mount mating parts comprise one or more channels.

Preferably, the one or more mount mating parts of the one or more connectors comprise a channel.

Preferably, a friction fit is provided between the one or more foot supports and the one or more mounts for controlling the ease of sliding movement of the one or more foot supports relative to the one or more mounts.

Preferably, the friction fit is provided between the one or more connectors and the one or more mounts for controlling the ease of sliding movement of the one or more connectors relative to the one or more mounts.

Preferably, the friction fit is adjustable.

Preferably, engagement of the one or more mount mating parts with the one or more sliding mating parts is adjustable.

Preferably, the one or more mount mating parts can be tightened into engagement with the one or more sliding mating parts to adjust the friction fit.

Preferably, the one or more foot supports are moveable along the mount.

Preferably, the one or more mounts comprise a seat connector, for connection to a seat, preferably to an aircraft seat.

Preferably, the seat connector is for connection to a spar of an aircraft seat frame, preferably a floor mounted spar.

In the context of this invention a "spar" of an aircraft seat is understood to refer to a transverse bar connecting upright frame members of an aircraft seat or forming part of the frame of an aircraft seat.

Preferably, the one or more mounts are triangular.

Preferably, the one or more sliding mating parts are positioned on an upper surface of the one or more mounts, preferably wherein the upper surface is a sloped upper surface.

Preferably, the upper surface of the one or more mounts is sloped at an angle of between about 15 degrees and about 30 degrees to a horizontal position, preferably between about 20 degrees and about 25 degrees, preferably about 23 degrees to a horizontal position.

As will be appreciated, reference to a "horizontal position" preferably corresponds to the plane of the floor of an aircraft cabin. As such, in preferred embodiments, the one or more mounts is sloped at an angle of between about 15 degrees and about 30 degrees to the floor of an aircraft cabin, preferably between about 20 degrees and about 25 degrees, preferably about 23 degrees to the floor of an aircraft cabin.

Preferably, the one or more mounts are for positioning on the floor of an aircraft cabin.

Preferably, the one or more mounts comprise a damping means. Preferably, the damping means is for preventing, or reducing the amount of, vibrations transmitted from the footrest to a seat to which the footrest is attached.

Preferably, the damping means is provided on the seat connector. Preferably, the damping means comprises a deformable material, preferably a rubber material.

Preferably, the damping means comprises a deformable ring for positioning between the seat connector and a frame, preferably between the seat connector and a spar of an aircraft seat.

Preferably, the upper surface of the foot support comprises a high friction surface, preferably a rubber material.

Preferably, the upper surface of the foot support comprises a deformable material, preferably a cushioning material.

Preferably, the footrest comprises one or more quick release mechanisms for removing the one or more foot supports from the footrest.

Preferably, the one or more quick release mechanisms allow for toolless removal of the one or more foot supports from the footrest.

Preferably, the one or more quick release mechanisms are for removing the one or more foot supports from the one or more connectors.

Preferably, the one or more quick release mechanisms comprises one or more first mating parts for releasable engagement with one or more second mating parts.

Preferably, the one or more first mating parts are sprung mating parts.

Preferably, the one or more first mating parts are male mating parts, preferably one or more bars.

Preferably, the one or more male mating parts comprise a domed or chamfered end for releasable engagement with the one or more second mating parts.

Preferably, the position of the one or more first mating parts relative to the position of the one or more second mating parts is adjustable.

Preferably, the one or more first mating parts are provided in one or more sleeves.

Preferably, the one or more sleeves comprise a screwthread for altering the position of the one or more first mating parts relative to the position of the one or more second mating parts.

Preferably, the one or more second mating parts are female mating parts, preferably one or more recesses or detents.

Preferably, the one or more first mating parts are provided on the foot support, preferably within a block, preferably wherein the block is positioned on a lower surface of the one or more foot supports at or towards the rear edge of the one or more foot supports.

Preferably, the one or more connectors comprises one or more pivot blocks for engagement with the one or more foot supports.

Preferably, the one or more foot supports are releasably attached to the one or more pivot blocks.

Preferably, the one or more foot supports are releasably attached to the one or more pivot blocks by the one or more quick release mechanisms.

Preferably, the one or more foot supports comprises a plate for engagement with a lip on the one or more pivot blocks for releasably securing the one or more foot supports to the one or more pivot blocks.

Preferably, the plate is positioned on a lower surface of the one or more foot supports at or towards the front edge of the one or more foot supports.

In another aspect of the present invention, there is provided a seat comprising a footrest as described herein, preferably wherein the seat is a vehicle seat, preferably an aircraft seat.

Preferably, the footrest is attached to the seat, preferably to the frame of the seat.

Preferably, the footrest is attached to a floor-mounted spar of the seat.

Preferably, the footrest is orientated for use by a person sitting in a seat behind the seat to which the footrest is attached.

According to a further aspect of the present invention, there is provided a row of seats comprising a plurality of seats as described herein.

It will be appreciated that reference to "one or more" includes reference to "a plurality".

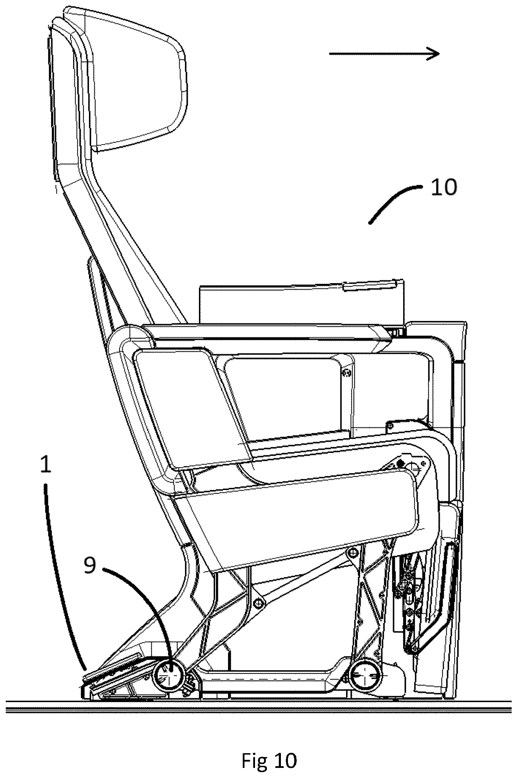

Within this specification, it will be appreciated that reference to front, rear, rearward and forward is with reference to the orientation of a person sitting in a seat as described herein with the person facing forward when sitting in the seat with their back against the seat back. As such, it will be appreciated that a forward direction is shown by the arrow in Figure 10.

Within this specification, it will be appreciated that reference to upper, upwards, downwards and lower is with reference to the orientation of an aircraft seat as described herein.

Preferably, reference herein to a "person" means a "passenger".

Preferably, reference to a "person" means a person sitting in a first seat positioned behind a second seat to which a footrest as described herein is attached.

Within this specification, the term "about" means plus or minus 20%, more preferably plus or minus 10%, even more preferably plus or minus 5%, most preferably plus or minus 2%. It will also be appreciated that the disclosure extends to passages herein which refer to the term "about" but with said term removed.

Within this specification embodiments have been described in a way which enables a clear and concise specification to be written, but it is intended and will be appreciated that embodiments may be variously combined or separated without parting from the invention. For example, it will be appreciated that all preferred features described herein are applicable to all aspects of the invention described herein and vice versa.

### DETAILED DESCRIPTION

Example embodiments of the present invention will now be described with reference to the accompanying Figures, in which
Figure 1 shows a first view of a footrest described herein;
Figure 2 shows a second view of a footrest described herein;
Figures 3A and 3B show further views of a footrest described herein;
Figures 4A and 4B show side views of a footrest described herein showing the first (Figure 4A) and second (Figure 4B) sliding stop positions;
Figures 5A, 5B and 5C show side views of a footrest described herein showing the first (Figure 4A) and second (Figure 4B) pivot stop positions and the at rest position (Figure 5C);
Figure 6 shows a footrest with a damping means;
Figure 7A shows a cross-sectional view of the footrest described herein;
Figures 7B and 7C show schematic cross-sectional views of the connection between a connector and mount of the footrest described herein;
Figure 8 shows an exploded view of the footrest described herein;
Figure 9 shows the footrest connected to the spar of an aircraft seat;
Figure 10 shows the footrest connected to an aircraft seat;
Figure 11 shows a side view of a first seat in a first row of seats and a second seat in a row of seats in front of the first seat; and
Figure 12 shows a row of aircraft seats each with a footrest attached.

The present invention relates to a footrest for a seat, in particular to a footrest which allows a user to exercise their leg muscles.

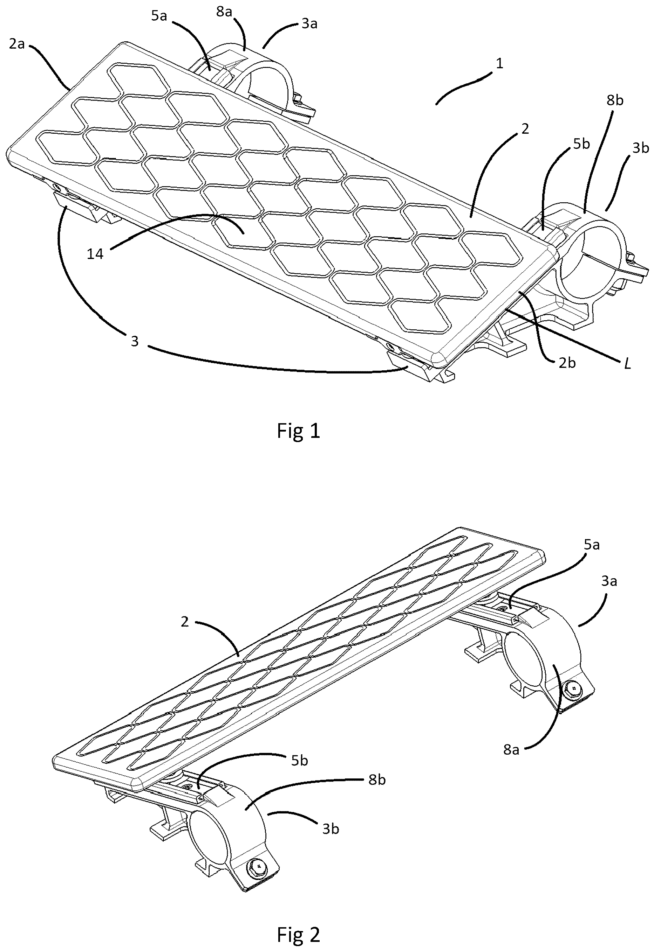

With reference to Figures 1, 2, 3A and 3B, a footrest 1 includes a foot support 2, in the form of a plate, and a pair of mounts 3. A first mount 3a is positioned near a first side 2a of the foot support 2 and a second mount 3b is positioned near a second side 2b of the foot support 2.

The foot support 2 is sized to accommodate a pair of feet of a passenger (not shown).

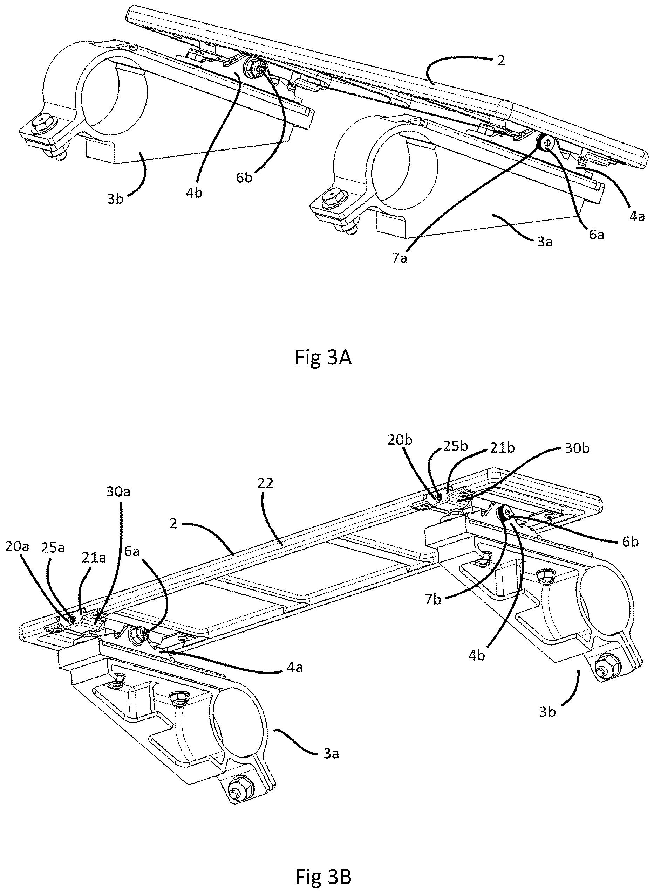

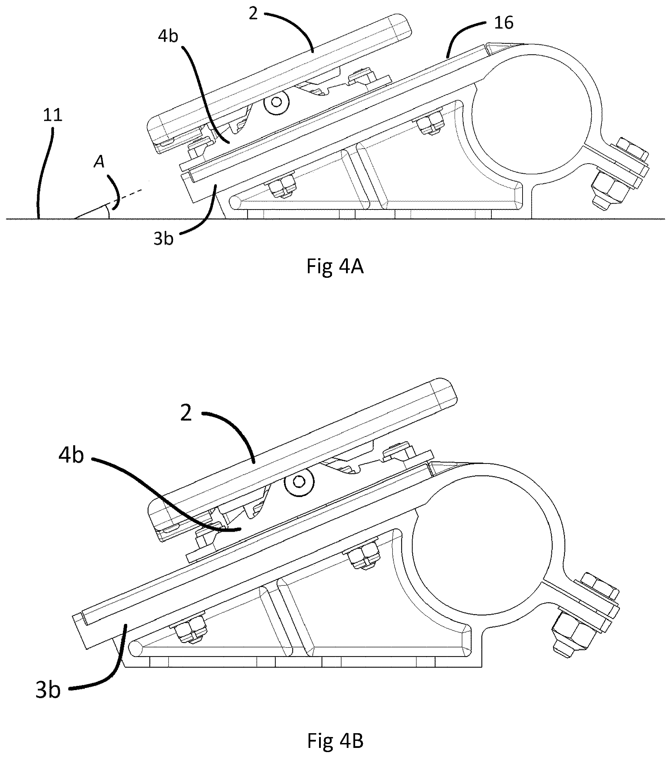

Each of the mounts 3a, 3b comprise a substantially triangular side profile, for example as shown in Figure 4A. With reference to Figures 3A and 3B, the foot support 2 is connected to the mounts 3a, 3b by first and second connectors 4a, 4b. As shown in Figures 1 and 2, the first mount 3a includes a channel 5a for receiving the first connector 4a and the second mount 3b includes a channel 5b for receiving the second connector 4b. The connectors 4a, 4b are slideable within the channels 5a, 5b to move the foot support 2 between a first sliding stop position (as shown in Figure 4A) and a second sliding stop position (as shown in Figure 4B). In the example shown, the foot support is slideable between the first and second sliding stop positions over a distance of 4cm.

The channels 5a, 5b are provided in a sloped upper surface 16 of the mounts 3a, 3b which means that the foot support is raised as it slides from the first (lower) sliding stop position to the second (higher) sliding stop position. As shown in Figure 4A, the sloped upper surface 16 is sloped at an angle A of 23 degrees to the floor 11 of an aircraft cabin.

As described in further detail below, the foot support 2 is connected to the connectors 4a, 4b by a pair of quick release mechanisms 30a, 30b which releasably connect the foot support 2 to a pair of pivot blocks 29a, 29b. The pivot blocks 29a, 29b are connected to the connectors 4a, 4b by bolts 6a, 6b which permits the foot support 2 to pivot relative to the connectors 4a, 4b via the pivot blocks 29a, 29b. Bolt 6a connects the first pivot block 29a to the first connector 4a and bolt 6b connects the second pivot block 29b to the second connector 4b.

The bolts 6a, 6b are received within apertures 7a, 7b positioned in a raised part of each connector 4a, 4b.

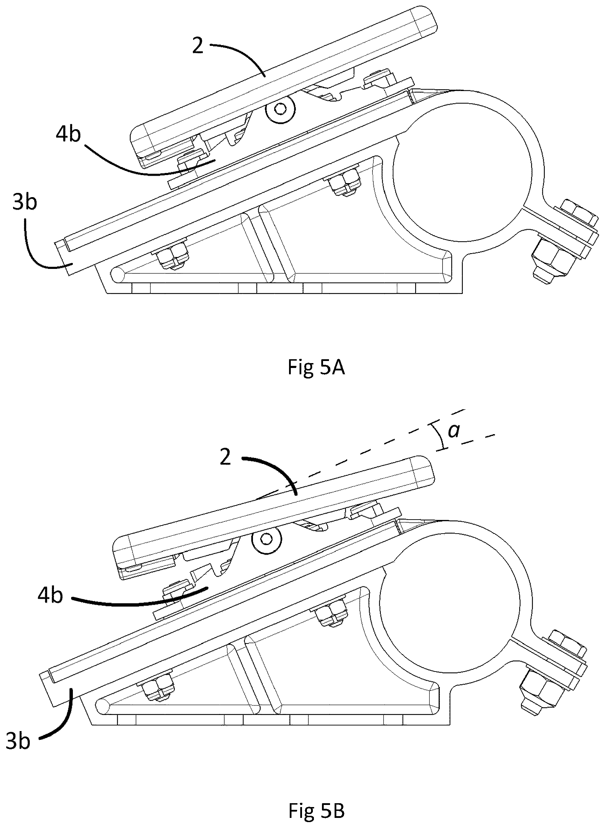

This means that the foot support is not only able to slide forward and rearward relative to the mounts 3a, 3b, but is also able to pivot downwards and upwards relative to the mounts 3a, 3b between a first pivot stop position (as shown in Figure 5A) and a second pivot stop position (as shown in Figure 5B).

In the example shown, the foot support is pivotable between the first pivot stop position and the second pivot stop position by an angle a of 8 degrees of rotation from the rest position shown in Figure 5A.

This allows a person whose feet are resting on the foot support to exercise their legs and feet by moving the foot support between the first and second sliding stop positions and the first and second pivot stop positions. The range of movement provided by the present invention is particularly suited to the use by a passenger sitting in an aircraft seat because it allows the calf to be flexed by a sufficient amount to exercise the legs of a passenger and reduce the risk of DVT.

As will be appreciated, in the example shown, the rest position corresponds to the first pivot stop position shown in Figure 5A.

The foot support is pivotable about a lateral axis L. As will be appreciated, the lateral axis is from a first side of the footrest to a second side of the footrest, or as will be appreciated from the first side 2a of the foot support 2 to the second side 2b of the foot support 2, so that the foot support 2 rocks downwards and upwards. In the example shown, the lateral axis L passes through a point which is positioned half way along each side of the foot support.

It will be appreciated that other means of connecting the foot support 2 to the mounts 3a, 3b could be used. For example, and whilst not specifically shown in the Figures, the foot support 2 could be provided with bolts or bars protruding laterally from each side 2a, 2b with the bolts or bars received with channels on opposing side faces of the mounts 3a, 3b. In this way, the foot support 2 would be slideable forward and rearward within the channel and would also be pivotable about the bolts or bars relative to the mounts 3a, 3b.

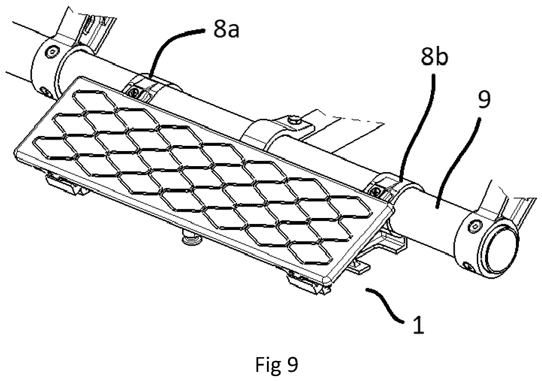

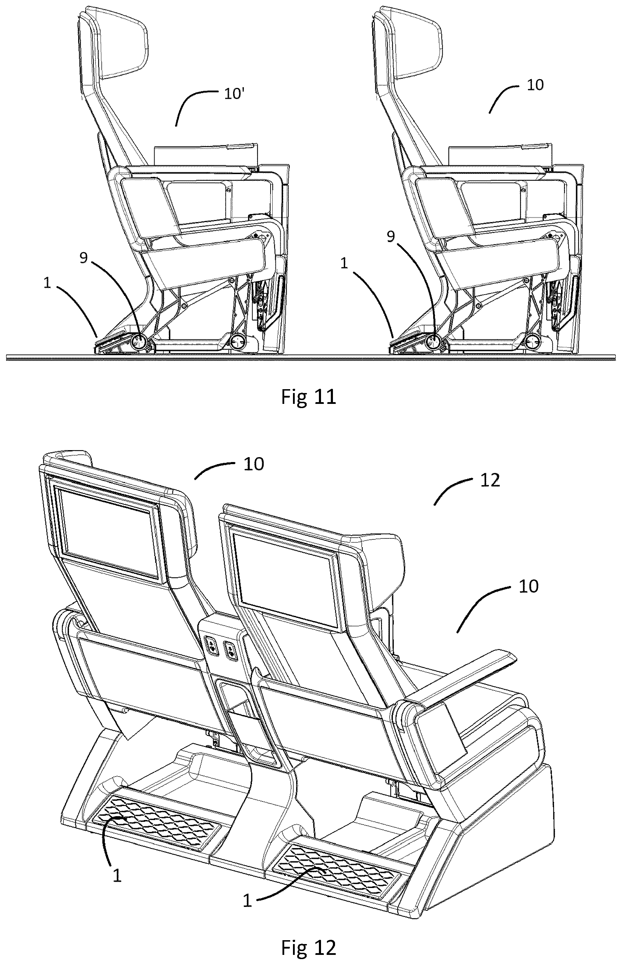

The footrest of the present invention is particularly well-suited to use in an aircraft and, as such, each of the mounts 3a, 3b include a seat connector 8a, 8b which is shaped for connection to a floor-mounted spar 9 of an aircraft seat 10. This is shown with particular reference to Figure 9. As shown in Figures 9, 10 and 11, the footrest 1 is attached to the spar 9 of the aircraft seat 10 and is orientated for use by a passenger sitting in a seat 10' behind the seat 10 to which the footrest 1 is attached. The footrest 1 can also be attached to multiple seats 10 of a row of seats 12, as shown in Figure 12.

A friction fit is provided between the connectors 4a, 4b and the mounts 3a, 3b which, whilst allowing the foot support 2 to be moved forward and rearward relative to the mounts 3a, 3b, maintains the foot support in position when a forward or rearward force is no longer applied to the foot support, for example when a passenger's feet are simply resting on the foot support 2 or have been removed from the foot support 2.

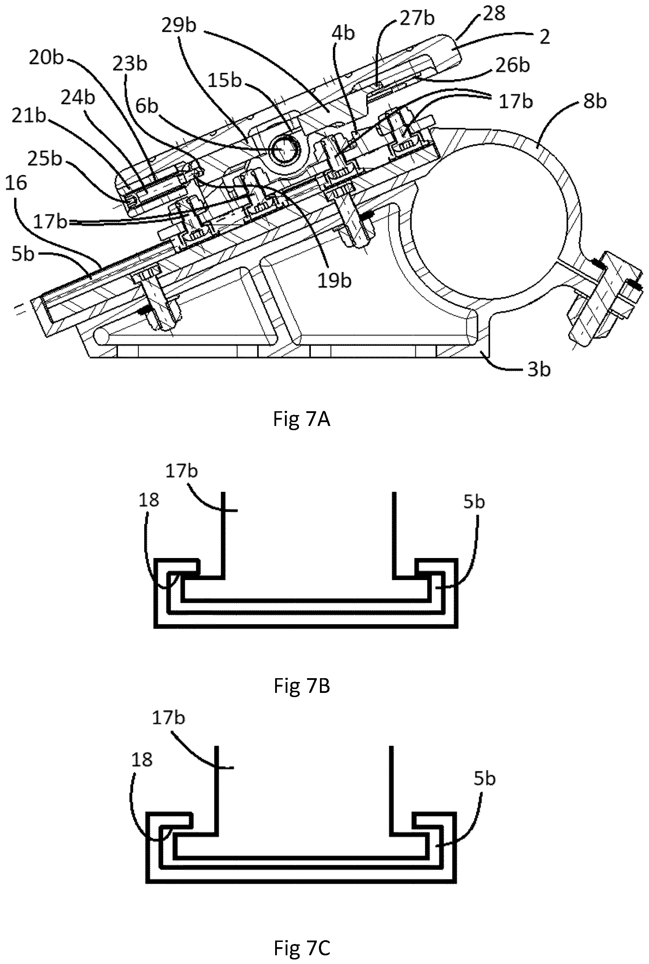

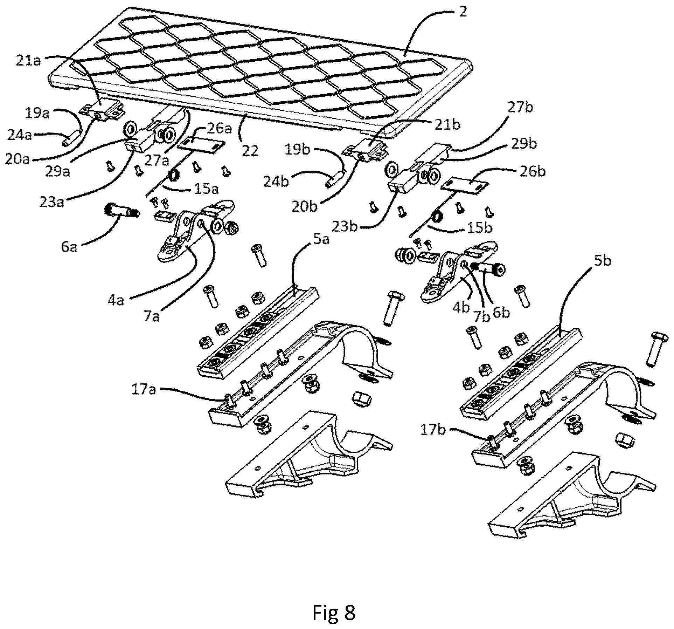

With reference to Figure 7A, connector 4b includes connector feet 17b which fit within the channel 5b. As shown in Figure 8, corresponding connector feet 17a are provided for connector 4a. As shown schematically in Figures 7B and 7C, the connector feet 17b can be tightened against (Figure 7B) or loosened away from (Figure 7C) an upper inner surface 18 of the channel 5b. This allows the friction fit to be adjusted to offer more or less resistance as the foot support 2 is moved between the first and second sliding stop positions.

It will be appreciated that connector 4a operates in the same way.

As also shown in Figure 7A, and with reference to Figure 3B the footrest includes a pair of quick release mechanisms 30a, 30b to allow the foot support 2 to be easily and quickly removed for maintenance, repair or replacement.

A pair of sprung bars 19a, 19b are positioned within apertures 20a, 20b of blocks 21a, 21b positioned on the underside of the rear edge 22 of the foot support 2 towards each side of the foot support 2.

The sprung bars 19a, 19b are positioned within threaded sleeves 24a, 24b which are threaded into the apertures 20a, 20b along a screw thread which allows their position to be adjustable.

As shown in Figure 7A, one end of the sprung bar 19b sits within a detent 23b on a pivot block 29b. The pivot block 29b is secured to connector 4b by bolt 6b and it is to the pivot block 29b that the foot support 2 is releasably attached.

As will be appreciated, whilst Figure 7A shows only one side of the foot support 2, the other side has corresponding features of sprung bar 19a, sleeve 24a, pivot block 29a and detent 23a, as shown in Figure 8.

The foot support 2 can be disengaged from the pivot blocks 29a, 29b by lifting the rear edge 22 of the foot support to disengage the sprung bars 19a, 19b from the detents 23a, 23b. The ease at which this can be done can be adjusted by altering the position of the threaded sleeves within the apertures 20a, 20b. Whilst not specifically shown, each threaded sleeve includes a hexagonal recess in its end for receiving a hex-key.

In the example shown, in order to prevent tampering by a passenger, inserts 25a, 25b are positioned within the opening of each aperture 20a, 20b.

In order to secure the front edge 28 of the foot support 2 in position, plates 26a, 26b are provided on the underside of the foot support 2. These can be positioned under a lip 27a, 27b of the pivot blocks 29a, 29b to prevent upward movement of the front of the foot support 2 when the sprung bars 19a, 19b are engaged with the detents 23a, 23b. As such, once the rear edge of the foot support 2 has been lifted to disengage the sprung bars 19a, 19b from the detents 23a, 23b, the foot support 2 can be moved forwards to disengage the plates 26a, 26b from the lips 27a, 27b. The foot support 2 is then separated from the pivot blocks 29a, 29b and thus the connectors 4a, 4b.

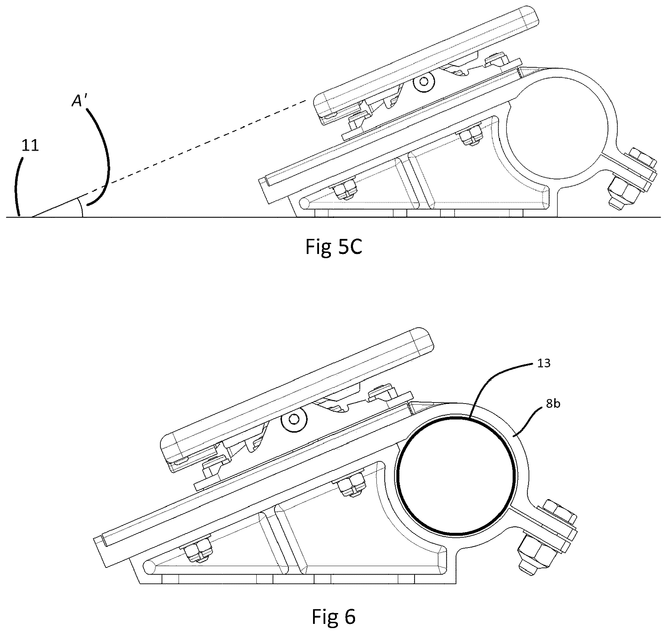

The connection between the foot support 2 and the connectors 4a, 4b is such that the foot support will return to a rest position corresponding to the first pivot stop position, as shown in Figure 5C. As shown in Figure 5C, the rest position is at an angle of 23 degrees to the floor 11 of an aircraft cabin. This is achieved by using a springs 15a, 15b (shown in Figure 7A and 8) to assist the return motion. The springs 15a, 15b can be adjusted to offer more or less resistance as the foot support 2 is moved between the first and second pivot stop positions.

Figure 6 shows the provision of a damping means in the form of a rubber sleeve or ring 13. The provision of the damping means reduces the vibrations felt by a passenger sitting in the seat in front when the footrest is used. It will be appreciated that both connectors 4a, 4b could be provided with damping means 13.

In the example shown, the foot support 2 includes a rubber material 14 on its upper surface. This provides a user with good grip between their feet and the foot support 2. It will, however, be appreciated that an alternative material could be used, for example a deformable, cushioning material could be used in order to provide both comfort and grip.

Whilst a single foot support 2 is shown in the attached Figures, it will be appreciated that a pair of foot supports 2 could be provided each for a different foot of a passenger.

Each of a pair of foot supports could be connected to one or a pair of mounts such that each foot support is independently slideable and pivotable relative to said mount or mounts.

It will also be appreciated that, instead of a pair of mounts 3a, 3b, as shown in the attached Figures, a single, centrally positioned mount 3 could be used.

It should be understood that various changes and modifications to the presently preferred embodiments described herein will be apparent to those skilled in the art. Such changes and modifications can be made without departing from the spirit and scope of the present invention and without diminishing its attendant advantages. It is therefore intended that such changes and modifications are covered by the appended claims.

## Claims

1. A footrest for a seat, wherein the footrest comprises (i) one or more foot supports for supporting one or more feet, and (ii) one or more mounts to which the one or more foot supports are connected, wherein the one or more foot supports are slideable and pivotable relative to the one or more mounts.

2. A footrest according to claim 1, wherein the one or more foot supports are slideable and pivotable relative to the one or more mounts by one or more feet positioned on the one or more foot supports, and/or
wherein the one or more foot supports are slideable forwards and rearwards between a first sliding stop position and a second sliding stop position, wherein the first sliding stop position is a rearward sliding stop position and the second sliding stop position is a forward sliding stop position.

3. A footrest according to any preceding claim, wherein the one or more foot supports are slidable along a slope wherein the first sliding stop position is lower than the second sliding stop position, and/or
wherein the one or more foot supports are slideable forwards and rearwards a distance of between about 2cm and about 15cm, and/or
wherein the one or more foot supports are pivotable downwards and upwards between a first pivot stop position and a second pivot stop position, wherein the first pivot stop position is an upward pivot position and the second pivot stop position is a downward pivot position.

4. A footrest according to any preceding claim, wherein
(i) the one or more foot supports are slidable forwards by a person placing one or both of their feet on the one or more foot supports, pivoting the one or more foot supports upwards and pushing the one or more foot supports forward with one or both of their feet, and/or
(ii) the one or more foot supports are slidable rearwards by a person placing one or both of their feet on the one or more foot supports, pivoting the one or more foot supports downwards and pulling the one or more foot supports rearward with one or both of their feet.

5. A footrest according to any preceding claim, wherein the one or more foot supports are pivotable upwards and downwards between a first pivot stop position and a second pivot stop position by between about 5 degrees and about 20 degrees of rotation, and/or
wherein the one or more mounts comprise a seat connector, for connection to a seat, preferably to an aircraft seat, preferably for connection to a spar of an aircraft seat frame, preferably a floor mounted spar.

6. A footrest according to any preceding claim, wherein pivotable movement of the one or more foot supports is biased towards a rest position.

7. A footrest according to claim 6, wherein the force required to move the one or more foot supports away from the rest position is adjustable, and/or
wherein the footrest comprises one or more biasing means for urging the one or more foot supports to the rest position, preferably wherein the one or more biasing means are adjustable, and/or
wherein the rest position is at or near the first pivot stop position, preferably wherein the rest position is the first pivot stop position, and/or
wherein the rest position is at an angle of between about 15 degrees and about 30 degrees to a horizontal position.

8. A footrest according to any preceding claim, wherein the one or more foot supports are connected to the one or more mounts by one or more connectors.

9. A footrest according to claim 8, wherein the one or more connectors are configured for pivotable engagement with one or more of said foot supports and slideable engagement with one or more of said mounts, and/or
wherein the one or more connectors comprise one or more foot support mating parts and one or more mount mating parts, wherein the one or more foot support mating parts are for pivotably mounting the connector to the foot support and the one or more mount mating parts are for slideably mounting the connector to the mount.

10. A footrest according to any preceding claim, wherein a friction fit is provided between the one or more foot supports and the one or more mounts for controlling the ease of sliding movement of the one or more foot supports relative to the one or more mounts.

11. A footrest according to claim 10, wherein the friction fit is adjustable.

12. A footrest according to any preceding claim, wherein the footrest comprises one or more quick release mechanisms for removing the one or more foot supports from the footrest.

13. A footrest according to any preceding claim, wherein the one or more mounts comprise a damping means, preferably wherein the damping means is for preventing, or reducing the amount of, vibrations transmitted from the footrest to a seat to which the footrest is attached.

14. A seat comprising a footrest according to any preceding claim, preferably wherein
(i) the seat is a vehicle seat, preferably an aircraft seat, and/or
(ii) the footrest is attached to the seat, preferably to the frame of the seat, preferably to a floor-mounted spar of the seat, and/or
(iii) the footrest is orientated for use by a person sitting in a seat behind the seat to which the footrest is attached.

15. A row of seats comprising a plurality of seats according to claim 14.
